(19) Europäisches Patentamt
European Patent Office
Office européen des brevets

(11) **EP 4 174 560 B1**

(12) **EUROPEAN PATENT SPECIFICATION**

(45) Date of publication and mention
of the grant of the patent:
**22.04.2026 Bulletin 2026/17**

(21) Application number: **21306529.5**

(22) Date of filing: **29.10.2021**

(51) International Patent Classification (IPC):
**G02C 7/02** $^{(2006.01)}$    **G02C 7/06** $^{(2006.01)}$

(52) Cooperative Patent Classification (CPC):
**G02C 7/027; G02C 7/061**

(54) **METHOD FOR DETERMINING A PAIR OF PROGRESSIVE ADDITION LENSES**

VERFAHREN ZUR BEURTEILUNG EINES PAARES VON GLEITSICHTGLÄSERN

PROCÉDÉ PERMETTANT DE DÉTERMINER UNE PAIRE DE LENTILLES D'ADDITION PROGRESSIVES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.05.2023 Bulletin 2023/18**

(73) Proprietor: **ESSILOR INTERNATIONAL**
**94220 Charenton-Le-Pont (FR)**

(72) Inventors:
• **BARANTON, Konogan**
**77450 Montry (FR)**

• **SPIEGEL, Daniel**
**424796 Singapore (SG)**
• **CALIXTE, Laurent**
**75012 Paris (FR)**
• **HERNANDEZ-CASTANEDA, Martha**
**75012 Paris (FR)**

(74) Representative: **Jacobacci & Partners France**
**32, rue de l'Arcade**
**75008 Paris (FR)**

(56) References cited:
**EP-A1- 3 599 499      EP-B1- 2 384 479
US-A1- 2005 122 472      US-A1- 2016 274 383
US-A1- 2019 113 770**

**Description**

TECHNICAL FIELD OF THE INVENTION

The invention relates to the fields of optometry.

More precisely, the invention relates to a method for determining an optical design of a pair of progressive addition lenses intended to be worn in front of the eyes of an wearer.

BACKGROUND INFORMATION AND PRIOR ART

The near vision area of a progressive addition lens, that is, the lower part of a progressive addition lens, is designed for near vision activities, such as reading. However, when walking, presbyopes explore the distant floor through this lower part. This situation is encountered by seniors while walking, but also by all presbyopes each time the foot placement is critical. There is thus a misuse of the near vision area of a progressive addition lens for instance when the wearer is in tough locomotion situations such as walking on an irregular floor, ascending or descending stairs, or crossing obstacles. This misuse may generate discomfort for the wearer.

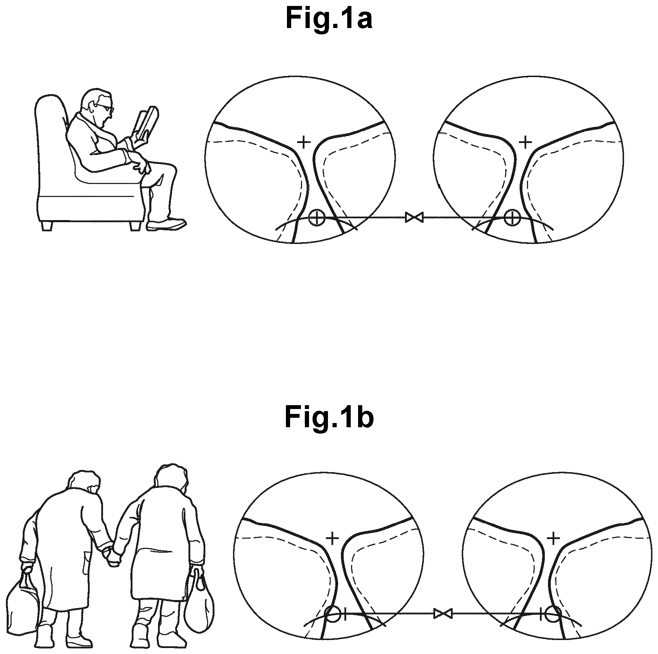

Figure 1 illustrates this misuse. Classically, as illustrated in Figure 1a, the near vision reference point of the progressive addition lens, located in the lower part of the lens, is shifted towards the nasal side to follow the vergence of gaze of the wearer. But, when the wearer looks at a farther distance through the lower part of the gaze, his vergence is too low to center his gaze at the near vision reference point, as shown on Figure 1b. The gaze of the wearer is directed towards the temporal side. This results in the creation of differences in prismatic deviation induced by the lenses between the two eyes of the wearer. Those differences in prismatic deviation negatively impact the binocular vision of the wearer. Therefore, the portion of the lower part of the lens the wearer is looking through is not optically adapted in a situation such as represented on Figure 1b.

Several attempts to avert this misuse exist. For instance, one option is to modify the optical power in the corridor of the progressive addition lens. Another idea is to reduce the addition in order to reduce the induced distortion, but in a limited manner, so as to keep enough power to allow reading. A third track is the design of progressive addition lenses based upon the eye, presenting the higher distortion sensibility.

US 2019/113770 A1 discloses a method of design of a progressive addition lens.

SUMMARY OF THE INVENTION

Therefore, one object of the invention is to provide an alternative solution to alleviate this issue, and in particular reduce the above-mentioned differences in prismatic deviation induced by the lenses reducing the visual performances and comfort of a wearer of progressive addition lenses.

The above object is achieved according to the invention by a method for determining an optical design of a pair of progressive addition lenses intended to be worn in front of the eyes of a wearer, said optical design being adapted to provide near dioptric corrections in near vision reference points of the progressive addition lenses and far dioptric corrections in far vision reference points of the progressive addition lenses , wherein the method comprises the steps of:

- selecting a starting pair of progressive addition lenses suitable for the near dioptric corrections and the far dioptric corrections,
- determining, for a given locomotion posture of the wearer, in which the wearer wears the starting pair of progressive addition lenses, a set of differences in prismatic deviation induced by the lens between the left eye and the right eye of the wearer over a set of gaze directions,
- determining said optical design based on:

  - the near and far dioptric corrections,
  - the set of differences,
  - at least one binocular motility parameter.

Therefore, the method according to the invention allows providing the wearer with a personalized equipment improving his vision in dynamic situations, such as when performing locomotion tasks, by taking into account his binocular motility parameters.

In an embodiment, the step of determining said optical design comprises the substeps of:

- i) determining the maximum difference in prismatic deviation between the left eye and the right eye acceptable by the wearer based on the at least one binocular motility parameter,

- ii) comparing the maximum value in modulus among the set of differences with the maximum difference in prismatic deviation acceptable by the wearer.

The set of differences in prismatic deviation induced by the lens may comprise a subset of differences in horizontal prismatic deviation and a subset of differences in vertical prismatic deviation.

For example, the at least one binocular motility parameter comprises at least one among: the wearer's fusional reserves, the wearer's fusional range, the wearer's fusional amplitude, the wearer's suppression range, the wearer's eye dominance, the wearer's dynamic exploration capacity, the wearer's phoria.

In a first example, the step of determining said optical design comprises the selection of a selected optical design among a plurality of predetermined optical designs.

The selection of a selected optical design may be based on the evaluation of values of a global evaluation function, each value corresponding to each of the predetermined optical designs, said global evaluation function being defined as a sum of weighted functions associated to optical criteria chosen among both of the two following optical criteria groups consisting of:

- a near vision optical criterion group,
- a locomotion optical criterion group.

In a second example, the step of determining said adapted optical design comprises the tailoring of a customized optical design.

The tailoring of the customized optical design may comprise a multi-objective optimization process based on a set of evaluation functions associated to optical criteria chosen among both of the two following optical criteria groups consisting of:

- a near vision optical criterion group,
- a locomotion optical criterion group.

The tailoring of the customized optical design may comprise an optimization process involving calculating the front surfaces and the rear surfaces of the pair of progressive addition lenses.

For example, the near vision optical criterion group comprises at least one among: power error, residual astigmatism, monocular visual acuity, binocular visual acuity and blur.

For example, the locomotion optical criterion group comprises at least one among: retinal flow in locomotion, dynamic distortions, differences in vertical prismatic deviation between the left eye and the right eye of the wearer, differences in total prismatic deviation between the left eye and the right eye of the wearer.

In an embodiment, when the result of the substep ii) is that the maximum value in modulus among the set of differences is higher than the maximum prismatic deviation acceptable by the wearer, each progressive addition lens of the pair of progressive addition lenses according to the determined optical design presents a reduced inset value in comparison to the inset value of each progressive addition lens of the starting pair of progressive addition lenses.

The given locomotion posture may be a stair ascent.

The given locomotion posture may be a stair descent.

In an embodiment, the visual acuity loss of the wearer, when wearing the pair of progressive addition lenses, is less than 0.05 LogMAR in a set of gaze directions comprised between a range of 20° to 50° of downwards gaze directions and a range of +/-15° of gaze eccentricity.

DETAILED DESCRIPTION OF EXAMPLES

The following description, enriched with joint drawings that should be taken as non-limitative examples, will help understand the invention and figure out how it can be realized.

On joint drawings:

- figure 1 illustrates the position of near vision reference points of classical progressive addition lenses with respect to the intersection of gaze directions in two different situations;
- figure 2 illustrates the concept of prismatic deviations induced by lenses, in both a convergence and a divergence configurations;
- figure 3 illustrates the position of near vision reference points of progressive addition lenses presenting reduced inset values with respect to the intersection of gaze directions in two different situations;
- figure 4 presents maps of differences in vertical and horizontal prismatic deviations induced by progressive addition lenses with different inset values;

- figure 5 presents values of differences in vertical prismatic deviations induced by progressive addition lenses suitable for different prescription data and with different inset values;
- figure 6 represents the visual acuity loss values for progressive addition lenses presenting different inset values;
- figure 7 represents an example of an ergorama for near vision activities;
- figure 8 represents an example of an ergorama for a standard locomotion activity;
- figure 9 presents a comparison according to a first example of the method according to the invention of the optical performances of several pairs of progressive addition lenses.

As described above, situations where a wearer of progressive addition lenses looks through the near vision areas, that is, the lower parts, of the progressive addition lenses at further distances than for near vision activities, such as walking, lead to a misuse of those near vision areas.

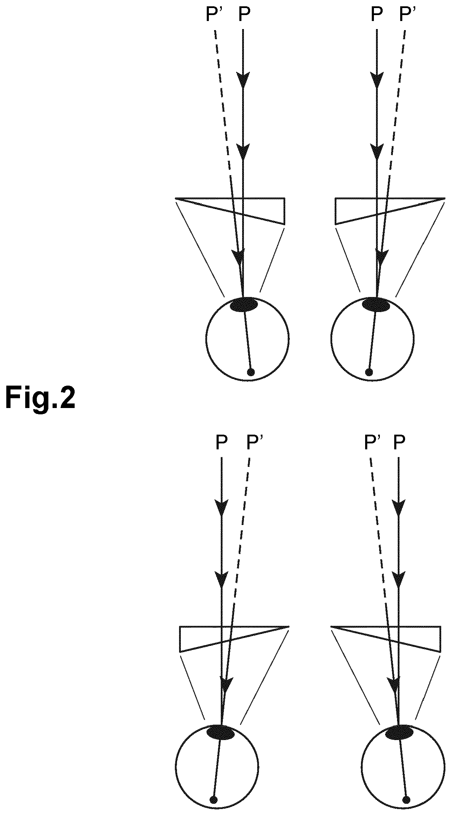

More precisely, it results in the creation of differences in prismatic deviation induced by the lenses between the two eyes of the wearer. By prismatic deviation induced by an ophthalmic lens, it is meant the deviation by a lens worn by a wearer of an incoming ray passing through the lens and entering into the eye of the wearer. Figure 2 is a schematic of prismatic deviations induced by a pair of lenses placed in front of two eyes. On Figure 2, the prismatic deviations for the right eye and the left eye are equal in amplitude. In the situation illustrated on Figure 1b, the prismatic deviation relating to the right eye may be different from the prismatic deviation relating to the left eye depending on the gaze direction.

The prismatic deviation induced by a lens can be decomposed into a horizontal prismatic deviation and a vertical prismatic deviation.

Horizontal means the direction of the axis crossing the left eye rotation center and the right eye rotation center of the wearer, within a tolerance of +/- 5 degrees. Vertical means the direction of the gravity. The vertical direction is substantially perpendicular to the horizontal direction.

In addition, the differences in prismatic deviation induced by the progressive addition lenses vary with the gaze direction of the wearer, causing binocular coordination difficulties. Thus, seniors, in particular, are affected since their gaze directions are often oriented toward the ground and since they present lower binocular coordination capabilities.

One aspect of the invention is to study the effect of reducing the inset of the progressive addition lenses on the vision of a wearer in locomotion situations. The inset value is known in the art and may be defined as follows. In a progressive addition lens, the near vision reference point (corresponding to the intersection with the gaze direction allowing the wearer to gaze in near vision) can be shifted horizontally with respect to a vertical line passing through the distance vision reference point, when the lens is in a position of use by its wearer. This shift, which is in the direction of the nasal side of the lens, is referred to as "inset". The inset may be determined by computation or by ray tracing based on the prescription data. In a situation where the vergence of the wearer is as illustrated on Figure 1b, the gaze of the wearer is directed towards the temporal side.

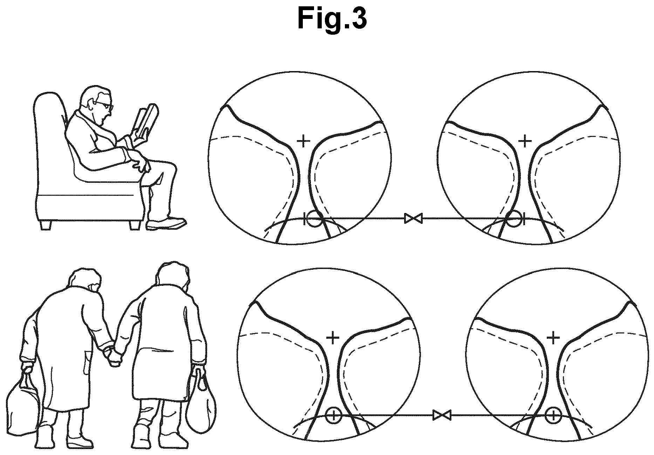

It was inferred by the inventors that positioning the near vision reference point closer to the intersection with the gaze of the wearer, even making it coincide with it, could lead to a compromise and improve the wearer's vision. Figure 3 is a schematic of progressive addition lenses with a reduced inset and shows how the near vision reference points can be positioned to coincide with the intersections of the lenses with the gaze directions when walking, or any other situation when the wearer looks through the lower part of the progressive addition lenses at a further distance.

It also appears from studies that the differences in prismatic deviation induced by lenses worn by a wearer have a strong impact on the quality of his binocular vision, especially the differences in vertical prismatic deviation.

The differences in horizontal and vertical prismatic deviations induced by lenses worn by a wearer in a given situation may be calculated by simulating the given situation with a computing apparatus. This computing apparatus may be specially constructed for the desired purposes, or it may comprise a general-purpose computer or a digital signal processor selectively activated or reconfigured by a computer program stored in the computer. Such a computer program may be stored in a computer readable storage medium suitable for storing electronic instructions. Some parameters taken into consideration for the simulation are for instance the real wearing parameters, such as the eye-lens distance, the fitting height, the interpupillary distance. The given situation, or the environment, is modeled by a list of points located at given distances from the wearer. Such model can be inferred from psychophysical experiments.

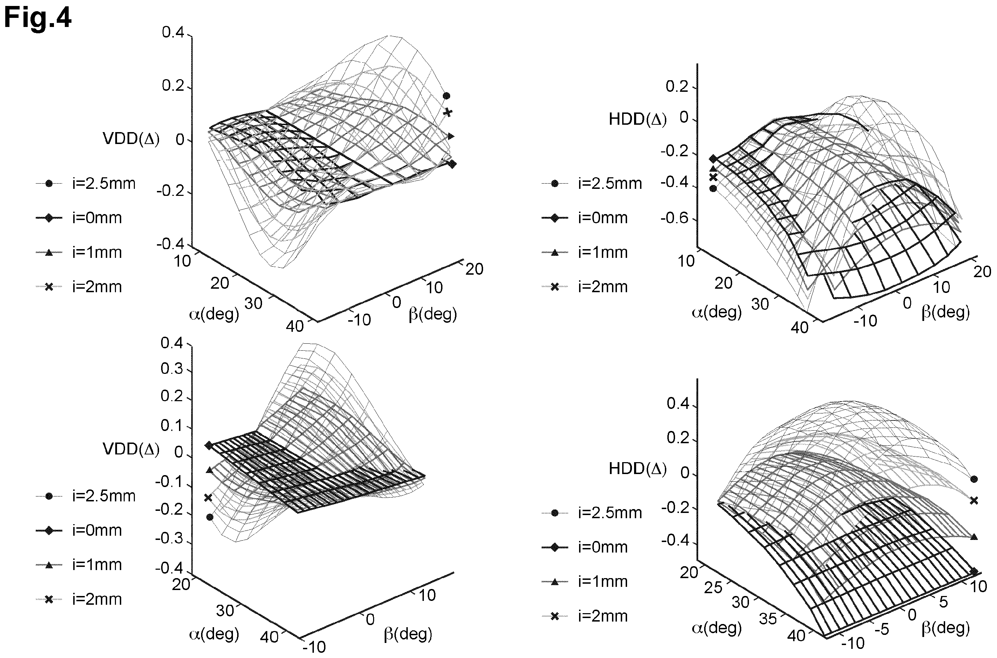

The effect of the reduction of the inset value of progressive addition lenses on the differences in prismatic deviation is illustrated in Figure 4.

Figure 4 shows several maps, over a set of gaze directions, representing the values of differences in horizontal and vertical prismatic deviation between the left eye and the right eye of a wearer wearing progressive addition lenses with different inset values. Two situations are illustrated on Figure 4: an ascent situation, that is, the wearer is in a posture of ascending stairs, and a descent situation, that is, the wearer is in a posture of descending stairs. The values of the differences are expressed in prismatic diopters ($\Delta$). $\alpha$ and $\beta$ represent respectively vertical and horizontal gaze directions in degrees. The considered progressive addition lenses are standard progressive lenses. The corresponding prescription data are a null sphere SPH and an addition ADD of 2.5 diopters. The different inset values are 2.5 mm, 2 mm, 1 mm and 0 mm. The respective peak-to-valley (PV) and root mean squared (rms) values for the differences are summarized in Table

**EP 4 174 560 B1**

1.

Table 1

| | Ascent | | | | Descent | | | |
|---|---|---|---|---|---|---|---|---|
| | Difference in vertical prismatic deviation (Δ) | | Difference in horizontal prismatic deviation (Δ) | | Difference in vertical prismatic deviation (Δ) | | Difference in horizontal prismatic deviation (Δ) | |
| Inset (mm) | PV | rms | PV | rms | PV | rms | PV | rms |
| 2.5 | 0.65 | 0.15 | 1.09 | 0.27 | 0.52 | 0.11 | 0.73 | 0.19 |
| 2 | 0.42 | 0.10 | 0.76 | 0.18 | 0.35 | 0.08 | 0.46 | 0.12 |
| 1 | 0.13 | 0.03 | 0.45 | 0.11 | 0.15 | 0.03 | 0.31 | 0.07 |
| 0 | 0.16 | 0.04 | 0.52 | 0.14 | 0.06 | 0.02 | 0.35 | 0.10 |

It can be seen that an optimal value of inset for the progressive addition lenses satisfying the prescription data can be found to minimize at the same time the differences in horizontal and vertical prismatic deviations induced by the lens and in both an ascent posture and a descent posture.

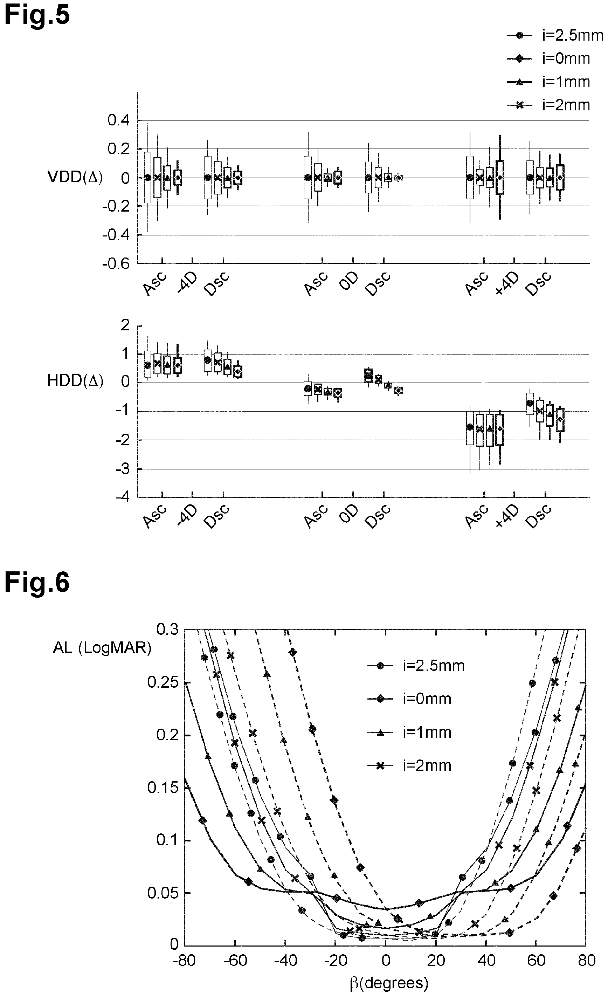

Figure 5 shows other results of calculated differences in horizontal and vertical prismatic deviation induced by progressive addition lenses in both an ascent posture and a descent posture for three different prescription data: a null sphere with an addition of 2.5 diopters, a sphere of 4 diopters with an addition of 2.5 diopters and a sphere of -4 diopters with an addition of 2.5 diopters. The minimum value, the maximum value and the standard deviation value are shown. More precisely, the bottom of the thin line represents the minimum value and the top of the thin line represents the maximum value. The middle of the vertical rectangle represents the mean value and its top and bottom edge represent respectively the sum of the mean value and the standard deviation, and the difference between the mean value and the standard deviation. It can be seen that the optimal inset value, that is, minimizing the differences in both horizontal and vertical prismatic deviation varies with the prescription data.

It has to be noted that the inset value reduction leads to an acuity loss in near vision. Figure 6 shows the visual acuity loss as a function of the horizontal gaze direction angle in degrees at the height of the near vision reference point. The plain curves represent the visual acuity loss considering at least one eye, and the dotted curves represent the visual acuity loss considering only one eye. It can be seen that progressive lenses with an inset of 1 mm reduce the visual acuity by 0.05 logMAR in a range of horizontal gaze direction angle comprised between - 20 degrees and + 20 degrees.

Now, the method for determining an optical design of a pair of progressive addition lenses intended to be worn in front of the eyes of a wearer according to the invention will be described. The optical design to be determined is adapted to provide near dioptric corrections in near vision reference points of the progressive addition lenses and far dioptric corrections in far vision reference points of the progressive addition lenses.

The method starts with a step a) of selecting a starting pair of progressive addition lenses suitable for the near dioptric corrections and the far dioptric corrections. The starting pair of progressive addition lenses can be of any type

Then, in a step b), a set of differences in prismatic deviation induced by the lens between the left eye and the right eye of the wearer over a set of gaze directions, for a given locomotion posture of the wearer wearing the starting pair of progressive addition lenses, is determined. The differences in prismatic deviation may be in the horizontal direction, in the vertical direction, or in any oblique direction. The given locomotion posture may be an ascent posture, a descent posture, a walking posture, crossing an obstacle or any kind of locomotion posture. Typically, the set of differences is calculated with a computing device such as described previously and results analogous to those presented on Figures 4 and 5 are obtained.

Finally, in a step c), the optical design is determined based on the near and far dioptric corrections, the set of differences, and at least one binocular motility parameter of the wearer.

It is supposed that at least one binocular motility parameter has been measured previously to the implementation of the method for determining the optical design of the pair of progressive addition lenses according to the invention.

By binocular motility parameter, it is meant one quantity among phoria, fusional reserve range, fusional amplitude, suppression range, eye dominance, or dynamic exploration capacity.

Phoria is defined by the latent eye deviation that the subject is usually able to compensate or overcome with his or her own fusional abilities. Phoria can have a horizontal orientation, a vertical orientation, or a combination of both a horizontal and a vertical orientation. Phoria is expressed in prismatic diopters, which can be converted into an angle, associated with a direction (inwards, outwards, upwards, downwards). For instance, phoria may be measured with the so-called Maddox rod dissociating test, with Modified Thorington Test Cards, by means of a cover test, or by means of a Von Graefe test.

Fusional reserve range is defined by an additional fusional ability that a subject is able to fuse after compensating his or her phoria. Fusional reserve range can be measured as the maximal prismatic value (in prismatic diopters) at which the subject is able to fuse the two images perceived by his or her two eyes. For instance, fusional reserve range may be measured with Berens prisms or Risley prisms. Another possibility is to use any kind of digital screen setup that allows dichoptic presentation such as a virtual reality setup, or a polarized screen with polarized glasses, or an anaglyphic setup. In that case, fusional reserve range can be measured by increasing the retinal disparity between the images. Fusional reserve range depends on the gaze position or the visual scene statistics, that is for example the peripheral environment, or the contrast and spatial frequencies of the environment.

Fusional amplitude is the total fusional ability of a subject, and corresponds to the sum of the phoria and the fusional reserve range.

Suppression range is the largest displacement of the two images perceived by each eye of a subject at which suppression occurs. Although there is no widely used method to measure suppression range, it can be assessed with the Worth 4-Dot test, or the Bagolini lens and Mallet unit test. Also, another example method so far used for specific scientific purpose is described in "Binocular fusion, suppression and diplopia for blurred edges" by Georgeson (2014), or in "The Relationship between fusion, suppression and diplopia in normal and amblyopic vision" by Spiegel et al. (2016).

Eye dominance, or ocular dominance, or eye preference, or eyedness, is the tendency of a subject to prefer visual input from one eye. Eye dominance is often quantified in a binary fashion (either the left eye or the right eye), but can be quantified by a value comprised between 0 and 1 (0 corresponding to the full dominance of one eye, 0.5 corresponding to both eyes equally dominant, 1 corresponding to the full dominance of the other eye). Eye dominance may be measured by the method described in the paper by Wan et al. "The binocular balance at high spatial frequencies as revealed by the binocular orientation combination task", Frontiers in Human Neuroscience 13(106).

Dynamic exploration capacity is the capacity to pursue a target and is thus related to voluntary eye movements. Dynamic exploration capacity may be assessed by studying versions and ductions of the wearer in both near vision and far vision. Versions represent the combined movements of the two eyes in the same directions. Ductions are monocular movements carried out starting from a primary position.

To determine the optical design of the pair of progressive addition lenses, one determines the maximum value in modulus Ms among the set of differences in prismatic deviation induced by the starting pair of progressive addition lenses determined in step b) over the set of gaze directions for the given locomotion posture. Besides, the maximum difference $M_A$ in prismatic deviation between the left eye and the right eye acceptable by the wearer is determined based on the at least one binocular motility parameter. For instance, a method such as in the article "Limits to vertical fusion in the field of vision according to horizontal vergences gaps" by Hernandez-Castaneda and Pedrono (2000) could be used.

For instance, the maximum difference in prismatic deviation between the left eye and the right eye acceptable by the wearer could be the measured fusional reserve range or the measured suppression range.

In an embodiment, the maximum value in modulus $M_S$ and the maximum difference $M_A$ are compared.

If the maximum value in modulus $M_S$ is lower than the maximum difference $M_A$, the starting pair of progressive addition lenses can be considered as not perturbing the binocular vision of the wearer. The starting pair of progressive addition lenses can then be chosen as the pair of progressive addition lenses.

If the maximum value in modulus $M_S$ is higher than the maximum difference $M_A$, the starting pair of progressive addition lenses can be considered as perturbing the binocular vision of the wearer. The optical design of the pair of progressive addition lenses to be determined by the method according to the invention should thus be different from the optical design of the starting pair of progressive addition lenses.

In another embodiment, the choice to determine the optical design of the pair of progressive addition lenses based on an optical design different from the optical design of the starting pair of progressive addition lenses may be motivated for instance by the wearer preferences, the wearer lifestyle, or the designer's choice (for instance, reading activities might be considered as more important than locomotion activities).

In the case where the optical design of the pair of progressive addition lenses should be different from the optical design of the starting pair of progressive addition lenses, in a first example, step c) consists then in the selection of a selected optical design among a plurality of predetermined optical designs.

One characteristic of the selected optical design may be that the maximum value in modulus of the differences in prismatic deviation it induces between the left eye and the right eye of the wearer should be less than the maximum difference $M_A$.

The plurality of predetermined optical designs corresponds to pairs of progressive addition lenses adapted to the prescription data of the wearer. By prescription data, it is meant at least the sphere SPH and the addition ADD prescribed to the wearer. The prescription data may also comprise a cylinder value CYL with an axis AXIS. The prescribed mean sphere is defined by: MeanSphere= SPH + CYL/2.

A list of optical criteria ($C_1,..., C_m$) is defined among two optical criteria groups consisting of a near vision optical criterion group and a locomotion optical criterion group.

By optical criterion, it is meant a criterion that has an impact on the visual performance of the wearer.

The near vision optical criterion group comprises one of the following criteria: power error, residual astigmatism, monocular visual acuity, binocular visual acuity and blur. Each criterion in the near vision optical criterion group is considered over an ergorama corresponding to standard or measured reading distances of the wearer. For example, this ergorama is defined by gaze directions comprised between 30 degrees and 35 degrees of gaze lowering for an object at 40 cm. This ergorama may change according to the frame and to the user environment.

The term "ergorama" designates a function associating to a gaze direction referenced by an angle value the distance of an object point.

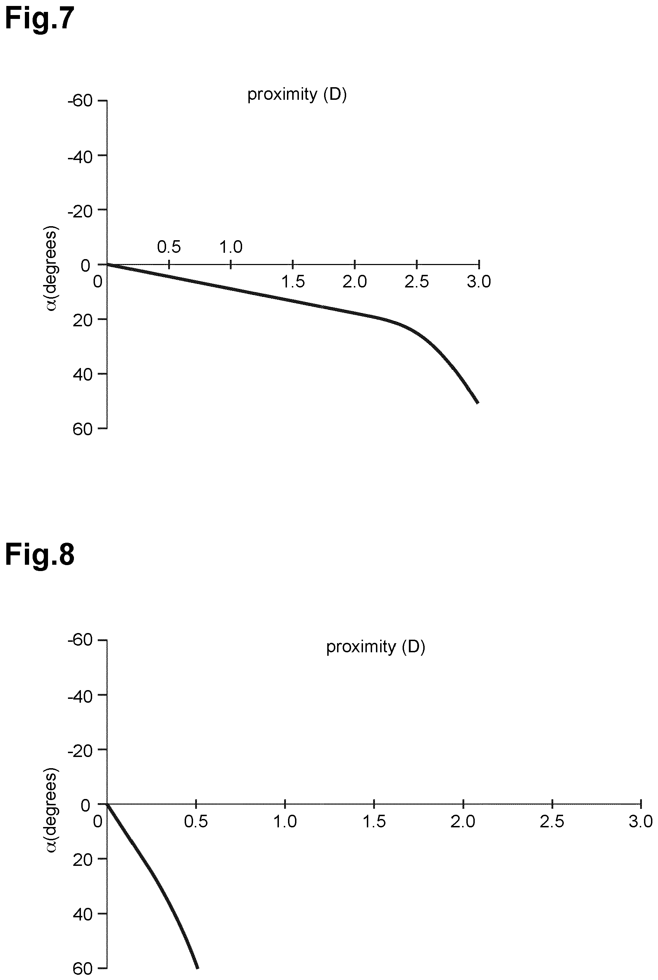

Figure 7 gives an example of an ergorama corresponding to standard or measured reading distances. The horizontal axis represents the proximity in diopters, that is, the inverse of the object distance. The vertical axis represents the gaze lowering angle in degrees.In the scope of the present disclosure, the afore-mentioned terms are understood according to the following definitions:

- "power error" defines the differences between the prescribed mean sphere and the mean sphere of each among the considered predetermined pair of progressive addition lenses for a set of gaze directions;
- "residual astigmatism" represents the differences between the prescribed astigmatism and the astigmatism introduced by each among the considered predetermined pair of progressive addition lenses over a set of gaze directions;
- "magnification" is defined as the ratio between the apparent angular size (or the solid angle) of an object seen without lens and the apparent angular size (or the solid angle) of an object seen through the lens; here, the two lenses among the considered predetermined pair of progressive addition lenses are considered;
- "monocular visual acuity" is the ability to see sharply fine details of an object with one eye; here, the monocular visual acuity with each lens among the considered predetermined pair of progressive addition lenses is considered, which may include the magnification induced by the lenses;
- "binocular visual acuity" is the ability to see sharply fine details of an object with both eyes; it may be measured by a subjective test aiming at determining the smallest optoptype discernable by an individual at a given distance with the two eyes; it may include the effects induced by the lenses such as magnification, blur, monocular visual acuity, residual astigmatism, power error;
- "blur" designates the loss of detail in the image of an object seen through the lens and due to optical aberrations introduced by the lens. Blur can be assessed by the loss in visual acuity it induces, or by an equivalent spherical defocus value in diopters.

The locomotion optical criterion group comprises one of the following criteria: retinal flow in locomotion, dynamic distortions, differences in vertical prismatic deviation between the left eye and the right eye of the wearer, differences in total prismatic deviation between the left eye and the right eye of the wearer. Each criterion in the locomotion optical criterion group is considered over an ergorama corresponding to objects on the ground. For instance, this ergorama is defined by gaze directions between 10 degrees and 40 degrees of gaze lowering for an object located at a distance between one meter and three meters, as it indeed depends on the ground slope such as in stairs.

Figure 8 gives an example of an ergorama for standard locomotion activity, namely walking on a horizontal ground. The horizontal axis represents the proximity in diopters, that is, the inverse of the object distance. The vertical axis represents the gaze lowering angle in degrees.

In the scope of the present disclosure, the afore-mentioned terms are understood according to the following definitions:

- "retinal flow" is linked to the notion of optical flow. The optical flow is the pattern of apparent motion of objects, surfaces, and edges in a visual scene caused by the relative movement of the wearer's head in the environment. The retinal flow corresponds to a projection of the optical flow on the retinal surface and is usually represented by a vector field. Each vector of the field corresponds to a speed and a direction of movement of an element of the environment.
- "retinal flow in locomotion" designates more specifically the retinal flow induced by a moving wearer and depends on the speed and direction of movement of the head of the wearer, the rotation of his eyes and the composition of the environment (structure, object distance ...). When the wearer is wearing an ophthalmic lens, the retinal flow also depends on the features of the ophthalmic lens.
- "dynamic distortions" are the distortion optical aberrations evaluated considering that the eye is moving behind an ophthalmic lens or that the head is moving in the environment;
- differences in vertical prismatic deviation between the left eye and the right eye of the wearer" are the differences between the vertical prismatic deviation induced by the left ophthalmic lens worn by the wearer and the vertical prismatic deviation induced by the right ophthalmic lens worn by the wearer;
- differences in total prismatic deviations between the left eye and the right eye of the wearer" are the differences between the total prismatic deviation induced by the left ophthalmic lens worn by the wearer and the total prismatic deviation induced by the right ophthalmic lens worn by the wearer.

Once the list of optical criteria $(C_1,..., C_m)$ is defined, a global evaluation function GEF is then defined based on the list of criteria $(C_1,... C_m)$. More specifically, the global evaluation function is defined as the weighted sum of evaluation functions $EF_k$ associated to each criterion $C_k$: $GEF = \sum_{k=1}^{m} w_k EF_k$ . The weights $w_k$ are defined depending on the measured binocular motility parameters of the wearer previously listed. For instance, the weights $w_k$ are defined so that the differences in vertical prismatic deviation between the left eye and the right eye are maintained below the measured fusional reserve range and/or the measured suppression range of the wearer. The evaluation functions $EF_k$ associated to each criterion $C_k$ can be for instance the identity function, or the square of the difference between the evaluated criterion $C_k$ and a target value for this criterion. The evaluation functions $EF_k$ may include normalization of the evaluated criterion $C_k$ by a predetermined reference value depending on the unit of the criterion $C_k$ and on the usual values of the evaluated criterion $C_k$ so that the evaluation functions $EF_k$ associated to each criterion $C_k$ are easily compared as terms of the same global evaluation function GEF. For instance, the global evaluation function GEF could be defined as a target peak-to-valley value or a target root mean square value to achieve.

Once the global evaluation function has been defined based on the list of criteria $(C_1,... C_m)$, the global evaluation function GEF is evaluated for each among the plurality of predetermined optical designs calculated with a computing device such as described previously. A subset of optical designs with the best global evaluation function values may be elected. By best, it is meant for instance optical designs with a large GEF value, in the case the global evaluation function GEF is to be maximized, or with a low GEF value, in the case the global evaluation function GEF is to be minimized. Then, the finally selected optical design may be selected by evaluating each evaluation function $EF_k$ associated to each criterion $C_k$ and choosing the best expected compromise between the value of each function $EF_k$ associated to each criterion $C_k$.

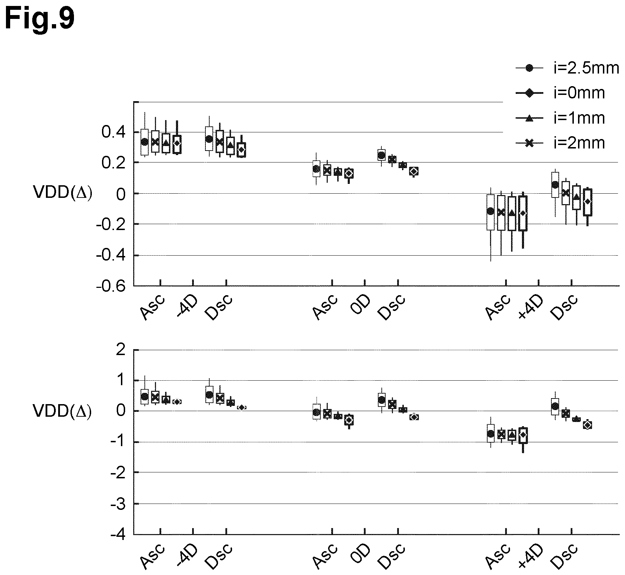

Figure 9 shows a comparison of the differences in vertical prismatic deviations between the left eye and the right eye of a wearer between two different lenses commercialized by the applicant, namely the X series model and the Physio 3.0 model. For each model, three prescription data, two types of locomotion posture, and four inset values were considered. The three prescription data were: SPH -4 diopters with ADD 2 diopters, SPH 0 with ADD 2 diopters and SPH +4 diopters with ADD 2 diopters. The two locomotion postures were an ascent posture (that is, a situation where the wearer is ascending stairs for example) and a descent posture (that is, a situation where the wearer is descending stairs for example). For the computation, the gaze direction lowering angles were between 10 degrees and 40 degrees and horizontal gaze direction angles between - 20 degrees and + 20 degrees were considered. The four inset values were 2.5 mm, 2mm, 1mm and 0 mm. On Figure 7, the minimum value, the maximum value and the standard deviation of the differences in vertical prismatic deviation are represented. It can be inferred from Figure 7 that the Physio 3.0 model induces smaller differences in vertical prismatic deviation between the eyes of the wearer than the X series model, for the prescription data SPH - 4 diopters with ADD 2diopters and particularly the prescription data SPH + 4 diopters with ADD 2 diopters.

Now a second example in the case that the optical design of the pair of progressive addition lenses to be determined by the method according to the invention should be different from the optical design of the starting pair of progressive addition lenses will be described.

In this second example, step c) consists in tailoring of a customized optical design.

One characteristic of the customized optical design may be that the maximum value in modulus of the differences in prismatic deviation it induces between the left eye and the right eye of the wearer should be less than the maximum difference $M_A$.

In this second example, the tailoring of the customized optical design consists in a multi-objective optimization process based on a set of objective functions associated to optical criteria and implemented with a computing device such as described previously. A multi-objective optimization process is an optimization process involving more than one evaluation function to be optimized simultaneously. The optical criteria are chosen among both the near vision optical criterion group and the locomotion optical criterion group defined in the first example. Weighted evaluation functions associated to each criterion, for instance as defined in the first example, are used to constitute the objectives of the multi-objective optimization process. The multi-objective optimization process may be based for instance on a genetic algorithm. The customized design can be chosen among the set of Pareto optimal optical designs resulting from the multi-objective optimization process.

A detailed description of a multi-objective optimization process used to determine an ophthalmic element such as an ophthalmic lens can be found in the patent application EP 3 754 416 A1 of the Applicant.

In a variant, the tailoring of the customized optical design consists in an optimization process implemented with a computing device such as described previously, where the front surfaces and the rear surfaces of the ophthalmic lenses of the pair of ophthalmic lenses are optimized. This allows having more degrees of freedom in order to satisfy, by means of a higher number of variables, a list of optical criteria defined among two optical criteria groups consisting of a static optical criterion group and a dynamic optical criterion group.

Indeed, criteria among the static optical criterion group and criteria among the dynamic optical criterion group, that will be defined below, might appear more difficult to satisfy simultaneously. Therefore, optimizing the pair of ophthalmic lenses by using a higher number of variables helps meet those criteria.

Detailed descriptions of such an optimization process involving varying both the front surface and the rear surface of ophthalmic lenses can be found in the patent application US2011/0202286 A1 and the patent EP2384479 B1 of the Applicant.

The static optical criterion group comprises one of the following criteria: power error, residual astigmatism, monocular visual acuity, binocular visual acuity and blur. Each criterion in the static vision optical criterion group is considered over an ergorama denoted as static ergorama, where sharp vision is needed. For instance, the static ergorama is defined by mean object distances of 40 cm, corresponding to a gaze lowering angle of 40°.

The dynamic optical criterion group comprises one of the following criteria: retinal flow in locomotion, dynamic distortions, differences in vertical prismatic deviation between the left eye and the right eye of the wearer, differences in total prismatic deviation between the left eye and the right eye of the wearer. Each criterion in the locomotion optical criterion group is considered over an ergorama denoted as dynamic ergorama, corresponding to an average distribution of objects in an environment of the wearer executing a locomotion task. For instance, the dynamic ergorama is defined by gaze lowering directions between 10 and 45 degrees and horizontal gaze directions between_20 and +20 degrees.

A global evaluation function is then defined based on the list of criteria. The goal of the optimization process is to minimize (or maximize, depending on the case) the global evaluation function. More specifically, the global evaluation function is defined as the weighted sum of evaluation functions associated with each criterion. The weights are defined depending on the measured binocular motility parameters of the wearer previously listed. For instance, the weights are defined so that the differences in vertical prismatic deviation between the left eye and the right eye are maintained below the measured fusional reserve range and the measured suppression range of the wearer. An evaluation function associated with a criterion can be for instance the identity function, or the square of the difference between the evaluated criterion and a target value for this criterion. The evaluation function may include normalization of the evaluated criterion by a predetermined reference value depending on the unit of criterion and on the usual values of the evaluated criterion so that the evaluation functions associated to each criterion are easily compared as terms of the same global evaluation function.

The variables used in the optimization process may be global parameters, such as the inset value, the progression length of the ophthalmic lenses, the material of the ophthalmic lenses, the base curve of the ophthalmic lenses.

The variables used in the optimization process may also be local parameters, such as point coordinates in meshes representing the surfaces of the ophthalmic lenses.

At the end of the optimization process, a customized optical design of the pair of progressive lenses more suitable for locomotion tasks of the wearer is obtained.

## Claims

1. A computer-implemented method of determining an optical design of a pair of progressive addition lenses intended to be worn in front of the eyes of a wearer, for the purpose of manufacturing the pair of spectacle lenses, said optical design being adapted to provide near dioptric corrections in near vision reference points of the progressive addition lenses and far dioptric corrections in far vision reference points of the progressive addition lenses,

   wherein the method comprises the steps of:

   - selecting a starting pair of progressive addition lenses suitable for the near dioptric corrections and the far dioptric corrections,
   - determining, for a given locomotion posture of the wearer, in which the wearer wears the starting pair of progressive addition lenses, a set of differences in prismatic deviation induced by the lens between the left eye and the right eye of the wearer over a set of gaze directions,
   - determining said optical design based on:

     - the near and far dioptric corrections,
     - the set of differences,
     - at least one binocular motility parameter.

2. The method according to claim 1, wherein the step of determining said optical design comprises the substeps of:

   - i) determining the maximum difference in prismatic deviation between the left eye and the right eye acceptable by the wearer based on the at least one binocular motility parameter,
   - ii) comparing the maximum value in modulus among the set of differences with the maximum difference in prismatic deviation acceptable by the wearer.

3. The method according to claim 1, wherein the set of differences in prismatic deviation induced by the lens comprises a subset of differences in horizontal prismatic deviation and a subset of differences in vertical prismatic deviation.

4. The method according to one of claims 1 to 3, wherein the at least one binocular motility parameter comprises at least one among: the wearer's fusional reserve range, the wearer's fusional amplitude, the wearer's suppression range, the wearer's eye dominance, the wearer's dynamic exploration capacity, the wearer's phoria.

5. The method according to one of claims 1 to 4, wherein the step of determining said optical design comprises the selection of a selected optical design among a plurality of predetermined optical designs.

6. The method according to claim 5, wherein said selection is based on the evaluation of values of a global evaluation function, each value corresponding to each of the predetermined optical designs, said global evaluation function being defined as a sum of weighted functions associated to optical criteria chosen among both of the two following optical criteria groups consisting of:

   - a near vision optical criterion group,
   - a locomotion optical criterion group.

7. The method according to one of claims 1 to 4, wherein the step of determining said adapted optical design comprises the tailoring of a customized optical design.

8. The method according to claim 7, wherein said tailoring comprises a multi-objective optimization process based on a set of evaluation functions associated to optical criteria chosen among both of the two following optical criteria groups consisting of:

   - a near vision optical criterion group,
   - a locomotion optical criterion group.

9. The method according to claim 7, wherein said tailoring comprises an optimisation process involving calculating the front surfaces and the rear surfaces of the pair of progressive addition lenses.

10. The method according to claim 6 or 8, wherein the near vision optical criterion group comprises at least one among: power error, residual astigmatism, monocular visual acuity, binocular visual acuity and blur.

11. The method according to claim 6, 8 or 10, wherein the locomotion optical criterion group comprises at least one among: retinal flow in locomotion, dynamic distortions, differences in vertical prismatic deviation between the left eye and the right eye of the wearer, differences in total prismatic deviation between the left eye and the right eye of the wearer.

12. The method according to one of claims 5 to 11 in their dependency to claim 2, when the result of the substep ii) is that the maximum value in modulus among the set of differences is higher than the maximum prismatic deviation acceptable by the wearer, each progressive addition lens of the pair of progressive addition lenses according to the determined optical design presents a reduced inset value in comparison to the inset value of each progressive addition lens of the starting pair of progressive addition lenses.

13. The method according to one of claims 1 to 12, wherein the given locomotion posture is a stair ascent.

14. The method according to one of claims 1 to 12, wherein the given locomotion posture is a stair descent.

15. The method according to one of claims 1 to 14, wherein the visual acuity loss of the wearer, when wearing the pair of progressive addition lenses, is less than 0.05 logMAR in a set of gaze directions comprised between a range of 20° to 50° of downwards gaze directions and a range of +/-15° of gaze eccentricity.

**Patentansprüche**

1. Computerimplementiertes Verfahren zum Bestimmen einer optischen Konstruktion eines Paars von zum Tragen vor den Augen eines Trägers vorgesehenen Gleitsichtadditionsgläsern zum Zweck einer Herstellung des Paars von Brillengläsern, wobei die optische Konstruktion dazu ausgelegt ist, Dioptrienkorrekturen in der Nähe in Nahsichtreferenzpunkten der Gleitsichtadditionsgläser und Dioptrienkorrekturen in der Ferne in Fernsichtreferenzpunkten der Gleitsichtadditionsgläser bereitzustellen, wobei das Verfahren die folgenden Schritte umfasst:

- Auswählen eines anfänglichen Paares von Gleitsichtadditionsgläsern, die für die Dioptrienkorrekturen in der Nähe und die Dioptrienkorrekturen in der Ferne geeignet sind,
- Bestimmen, für eine vorgegebene Bewegungshaltung des Trägers, in der der Träger das anfängliche Paar von Gleitsichtadditionsgläsern trägt, eines Satzes von Differenzen bei einer durch das Glas zwischen dem linken Auge und dem rechten Auge des Trägers hervorgerufenen prismatischen Ablenkung über einen Satz von Blickrichtungen,
- Bestimmen der optischen Konstruktion basierend auf Folgendem:

- den Dioptrienkorrekturen in der Nähe und in der Ferne,
- dem Satz von Differenzen,
- mindestens einem binokularen Motilitätsparameter.

2. Verfahren nach Anspruch 1, wobei der Schritt zum Bestimmen der optischen Konstruktion die folgenden Teilschritte umfasst:

- i) Bestimmen der maximalen Differenz bei der prismatischen Ablenkung zwischen dem linken Auge und dem rechten Auge, die für den Träger akzeptabel ist, basierend auf dem mindestens einen binokularen Motilitätsparameter,
- ii) Vergleichen des maximalen Modulwerts aus dem Satz von Differenzen mit der maximalen Differenz bei der prismatischen Ablenkung, die für den Träger akzeptabel ist.

3. Verfahren nach Anspruch 1, wobei der Satz von Differenzen bei der durch das Glas hervorgerufenen prismatischen Ablenkung einen Teilsatz von Differenzen bei einer horizontalen prismatischen Ablenkung und einen Teilsatz von Differenzen bei einer vertikalen prismatischen Ablenkung umfasst.

4. Verfahren nach einem der Ansprüche 1 bis 3, wobei der mindestens eine binokulare Motilitätsparameter mindestens eines aus Folgendem umfasst: einen Fusionsreservebereich des Trägers, eine Fusionsamplitude des Trägers, einen Suppressionsbereich des Trägers, eine Augendominanz des Trägers, eine dynamische Explorationsfähigkeit des Trägers, eine Phorie des Trägers.

5. Verfahren nach einem der Ansprüche 1 bis 4, wobei der Schritt zum Bestimmen der optischen Konstruktion die Auswahl einer ausgewählten optischen Konstruktion aus mehreren vorbestimmten optischen Konstruktionen umfasst.

6. Verfahren nach Anspruch 5, wobei die Auswahl auf der Auswertung von Werten einer globalen Auswertungsfunktion basiert, wobei jeder Wert jeder der vorbestimmten optischen Konstruktionen entspricht, wobei die globale Auswertungsfunktion als eine Summe von gewichteten Funktionen definiert ist, die optischen Kriterien zugeordnet sind, die aus beiden der zwei folgenden Gruppen von optischen Kriterien ausgewählt sind, die aus Folgendem bestehen:

- einer Gruppe von optischen Kriterien für eine Nahsicht,
- einer Gruppe von optischen Kriterien für eine Bewegung.

7. Verfahren nach einem der Ansprüche 1 bis 4, wobei der Schritt zum Bestimmen der angepassten optischen Konstruktion das Maßschneidern einer individuellen optischen Konstruktion umfasst.

8. Verfahren nach Anspruch 7, wobei das Maßschneidern einen Mehrzieloptimierungsprozess umfasst, der auf einem Satz von Auswertungsfunktionen basiert, die optischen Kriterien zugeordnet sind, die aus beiden der zwei folgenden Gruppen von optischen Kriterien ausgewählt sind, die aus Folgendem bestehen:

- einer Gruppe von optischen Kriterien für eine Nahsicht,
- einer Gruppe von optischen Kriterien für eine Bewegung.

9. Verfahren nach Anspruch 7, wobei das Maßschneidern einen Optimierungsprozess umfasst, der ein Berechnen der vorderen Oberflächen und der hinteren Oberflächen des Paars von Gleitsichtadditionsgläsern beinhaltet.

10. Verfahren nach Anspruch 6 oder 8, wobei die Gruppe von optischen Kriterien für eine Nahsicht mindestens eines aus Folgendem umfasst: Brechwertfehler, Restastigmatismus, monokulare Sehschärfe, binokulare Sehschärfe und Unschärfe.

11. Verfahren nach Anspruch 6, 8 oder 10, wobei die Gruppe von optischen Kriterien für eine Bewegung mindestens eines aus Folgendem umfasst: einen retinalen Fluss bei Bewegung, dynamische Verzerrungen, Differenzen bei einer vertikalen prismatischen Ablenkung zwischen dem linken Auge und dem rechten Auge des Trägers, Differenzen bei einer prismatischen Gesamtablenkung zwischen dem linken Auge und dem rechten Auge des Trägers.

12. Verfahren nach einem der Ansprüche 5 bis 11 bei Abhängigkeit von Anspruch 2, wobei, wenn das Ergebnis von Teilschritt ii) ist, dass der maximale Modulwert aus dem Satz von Differenzen höher als die maximale prismatische Ablenkung ist, die für den Träger akzeptabel ist, jedes Gleitsichtadditionsglas des Paares von Gleitsichtadditionsgläsern gemäß der bestimmten optischen Konstruktion einen reduzierten Insetwert im Vergleich zum Insetwert jedes Gleitsichtadditionsglases des anfänglichen Paares von Gleitsichtadditionsgläsern aufweist.

13. Verfahren nach einem der Ansprüche 1 bis 12, wobei die vorgegebene Bewegungshaltung ein Treppenaufstieg ist.

14. Verfahren nach einem der Ansprüche 1 bis 12, wobei die vorgegebene Bewegungshaltung ein Treppenabstieg ist.

15. Verfahren nach einem der Ansprüche 1 bis 14, wobei der Sehschärfeverlust des Trägers beim Tragen des Paares von Gleitsichtadditionsgläsern kleiner als 0,05 logMAR in einem Satz von Blickrichtungen ist, die in einem Bereich von 20° bis 50° von Abwärtsblickrichtungen und einem Bereich von +/-15° einer Blickexzentrizität liegen.

**Revendications**

1. Procédé mis en œuvre par ordinateur de détermination d'une conception optique d'une paire de verres progressifs d'addition prévus pour être portés devant les yeux d'une personne porteuse, dans le but de fabriquer la paire de verres de lunettes, ladite conception optique étant adaptée pour fournir des corrections dioptriques de près dans des points de référence de vision de près des verres progressifs d'addition et des corrections dioptriques de loin dans des points de référence de vision de loin des verres progressifs d'addition,
dans lequel le procédé comprend les étapes suivantes :

   - la sélection d'une paire de départ de verres progressifs d'addition appropriés pour les corrections dioptriques de près et les corrections dioptriques de loin,
   - la détermination, pour une posture de locomotion donnée de la personne porteuse, dans laquelle la personne porteuse porte la paire de départ de verres progressifs d'addition, d'un ensemble de différences de déviation prismatique induites par le verre entre l'œil gauche et l'œil droit de la personne porteuse sur un ensemble de directions de regard,
   - la détermination de ladite conception optique sur la base :

      - des corrections dioptriques de près et de loin,
      - de l'ensemble de différences,
      - d'au moins un paramètre de motilité binoculaire.

2. Procédé selon la revendication 1, dans lequel l'étape de la détermination de ladite conception optique comprend les sous-étapes suivantes :

   - i) la détermination de la différence maximum de déviation prismatique entre l'œil gauche et l'œil droit acceptable par la personne porteuse, sur la base de l'au moins un paramètre de motilité binoculaire,
   - ii) la comparaison de la valeur maximum en module parmi l'ensemble de différences à la différence maximum de déviation prismatique acceptable par la personne porteuse.

3. Procédé selon la revendication 1, dans lequel l'ensemble de différences de déviation prismatique induites par le verre comprend un sous-ensemble de différences de déviation prismatique horizontale et un sous-ensemble de différences de déviation prismatique verticale.

**4.** Procédé selon l'une des revendications 1 à 3, dans lequel l'au moins un paramètre de motilité binoculaire comprend au moins un paramètre parmi : la plage de réserve de fusion de la personne porteuse, l'amplitude de fusion de la personne porteuse, la plage de suppression de la personne porteuse, la dominance oculaire de la personne porteuse, la capacité d'exploration dynamique de la personne porteuse, la phorie de la personne porteuse.

**5.** Procédé selon l'une des revendications 1 à 4, dans lequel l'étape de la détermination de ladite conception optique comprend la sélection d'une conception optique sélectionnée, parmi une pluralité de conceptions optiques prédéterminées.

**6.** Procédé selon la revendication 5, dans lequel ladite sélection est basée sur l'évaluation de valeurs d'une fonction d'évaluation globale, chaque valeur correspondant à chacune des conceptions optiques prédéterminées, ladite fonction d'évaluation globale étant définie comme étant une somme de fonctions pondérées associées à des critères optiques choisis parmi les deux groupes de critères optiques suivants constitués :

- d'un groupe de critères optiques de vision de près,
- d'un groupe de critères optiques de locomotion.

**7.** Procédé selon l'une des revendications 1 à 4, dans lequel l'étape de la détermination de ladite conception optique adaptée comprend l'appropriation d'une conception optique personnalisée.

**8.** Procédé selon la revendication 7, dans lequel ladite appropriation comprend un processus d'optimisation multi-objectif basé sur un ensemble de fonctions d'évaluation associées à des critères optiques choisis parmi les deux groupes suivants de critères optiques constitués :

- d'un groupe de critères optiques de vision de près,
- d'un groupe de critères optiques de locomotion.

**9.** Procédé selon la revendication 7, dans lequel ladite appropriation comprend un processus d'optimisation impliquant le calcul des surfaces avant et des surfaces arrière de la paire de verres progressifs d'addition.

**10.** Procédé selon la revendication 6 ou 8, dans lequel le groupe de critères optiques de vision de près comprend au moins un paramètre parmi : erreur de puissance, astigmatisme résiduel, acuité visuelle monoculaire, acuité visuelle binoculaire, et flou.

**11.** Procédé selon la revendication 6, 8, ou 10, dans lequel le groupe de critères optiques de locomotion comprend au moins un paramètre parmi : flux rétinien en locomotion, distorsions dynamiques, différences de déviation prismatique verticale entre l'œil gauche et l'œil droit de la personne porteuse, différences de déviation prismatique totale entre l'œil gauche et l'œil droit de la personne porteuse.

**12.** Procédé selon l'une des revendications 5 à 11 lorsqu'elle dépend de la revendication 2, lorsque le résultat de la sous-étape ii) est que la valeur maximum en module parmi l'ensemble de différences est plus élevée que la déviation prismatique maximum acceptable par la personne porteuse, chaque verre progressif d'addition de la paire de verres progressifs d'addition selon la conception optique déterminée présente une valeur réduite de décentrement de zone de vision de près par comparaison à la valeur de décentrement de zone de vision de près de chaque verre progressif d'addition de la paire de départ de verres progressifs d'addition.

**13.** Procédé selon l'une des revendications 1 à 12, dans lequel la posture de locomotion donnée est une montée de marches.

**14.** Procédé selon l'une des revendications 1 à 12, dans lequel la posture de locomotion donnée est une descente de marches.

**15.** Procédé selon l'une des revendications 1 à 14, dans lequel la perte d'acuité visuelle de la personne porteuse, lorsqu'elle porte la paire de verres progressifs d'addition, est inférieure à 0,05 logMAR dans un ensemble de directions de regard compris entre une plage de 20° à 50° de directions de regard vers le bas et une plage de +/-15° d'excentricité de regard.

# Fig.1a

# Fig.1b

**Fig.2**

# Fig.3

Fig.4

# Fig.5

# Fig.6

# Fig.7

# Fig.8

## Fig.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019113770 A1
- EP 3754416 A1
- US 20110202286 A1
- EP 2384479 B1

**Non-patent literature cited in the description**

- **GEORGESON**. *Binocular fusion, suppression and diplopia for blurred edges*, 2014
- **SPIEGEL et al.** *The Relationship between fusion, suppression and diplopia in normal and amblyopic vision*, 2016
- **WAN et al.** The binocular balance at high spatial frequencies as revealed by the binocular orientation combination task. *Frontiers in Human Neuroscience*, vol. 13 (106)
- **HERNANDEZ-CASTANEDA** ; **PEDRONO**. *Limits to vertical fusion in the field of vision according to horizontal vergences gaps*, 2000